# EUROPÄISCHE PATENTSCHRIFT

(11) **EP 4 219 934 B1**
(45) Veröffentlichungstag und Bekanntmachung des Hinweises auf die Patenterteilung: **24.12.2025**
(21) Anmeldenummer: 22153587.5
(22) Anmeldetag: 27.01.2022
(51) Int. Cl.: F03D 1/06, F03D 7/02

(54) **VERFAHREN ZUR REDUZIERUNG EINER GERÄUSCHEMISSION EINES WINDENERGIEANLAGEN-ROTORBLATTES UND WINDENERGIEANLAGEN-ROTORBLATT**
METHOD FOR REDUCING THE NOISE EMISSION OF A WIND ENERGY TURBINE ROTOR BLADE AND WIND ENERGY TURBINE ROTOR BLADE
PROCÉDÉ DE RÉDUCTION D'UNE ÉMISSION SONORE D'UNE PALE DE ROTOR D'ÉOLIENNE ET PALE DE ROTOR D'ÉOLIENNE

(43) Veröffentlichungstag der Anmeldung: 02.08.2023
(73) Patentinhaber: Wobben Properties GmbH, 26607 Aurich (DE)
(72) Erfinder: Stüttchen, Tanja, 26131 Oldenburg (DE); Kubasik, Andre, 26603 Aurich (DE); Stemberg, Jochen, 26607 Aurich (DE)
(74) Vertreter: Eisenführ Speiser

(56) Entgegenhaltungen:
- EP-B1- 1 603 736
- EP-B1- 3 129 645
- WO-A1-2014/048437
- WO-A1-2020/231828

## Beschreibung

Die vorliegende Erfindung betrifft ein Verfahren zur Reduzierung einer Geräuschemission eines Windenergieanlagen-Rotorblattes und Windenergieanlagen-Rotorblatt.

Zur Reduzierung einer Geräuschemission eines Windenergieanlagen-Rotorblattes beim Betrieb des Rotorblattes kann ein Anbauteil wie z. B. ein Hinterkantenkamm (Serration) an einer Hinterkante eines Rotorblattes angebracht oder angeklebt werden.

Während des Patenterteilungsverfahrens wurden u.a. folgende Dokumente betrachtet: EP 3 129 645 B1 und WO 2020/231828 A1.

Die Aufgabe der vorliegenden Erfindung besteht darin, die Geräuschemission eines Windenergieanlagen-Rotorblattes beim Betrieb weiter zu reduzieren.

Diese Aufgabe wird durch ein Verfahren zur Reduktion einer Geräuschemission eines Windenergieanlagen-Rotorblattes nach Anspruch 1 und durch ein Windenergieanlagen-Rotorblatt nach Anspruch 7 gelöst.

Somit wird ein Verfahren zur Reduzierung einer Geräuschemission eines Windenergieanlagen-Rotorblattes beim Betrieb des Rotorblattes vorgesehen. Das Rotorblatt weist eine Rotorblattwurzel, eine Rotorblattspitze, eine Vorderkante, eine Hinterkante, eine Saugseite und eine Druckseite auf. Im Bereich der Druckseite und insbesondere im Bereich der Hinterkante kann ein Anbauteil oder Anbauelement vorgesehen sein. An der Hinterkante ist mindestens ein Hinterkantenkamm mit einer Mehrzahl von Zacken vorgesehen.

Ferner ist ein erster Übergang zwischen der Saugseite und dem Anbauteil sowie ein zweiter Übergang zwischen der Druckseite und dem Anbauteil vorhanden. Der Übergang zwischen der Druckseite und dem Anbauteil wird mit einer Ausgleichsmasse aufgefüllt. Das Anbauteil ist als Hinterkantenkamm ausgestaltet.

Gemäß einem Aspekt der vorliegenden Erfindung wird ein Spachtel an eine Oberfläche der Druckseite angelegt und überdeckt den druckseitigen (zweiten) Übergang und insbesondere eine Stufe am druckseitigen (zweiten) Übergang. Der Punkt an einer Druckseite des Anbauteils (d.h. des Hinterkantenkamms), an welchem das freie Ende des Spachtels anliegt, wird markiert und beschreibt denjenigen Bereich, bis zu welchem die Ausgleichsmasse aufzutragen ist. Somit kann die Ausgleichsmasse so vorgesehen werden, dass sie eine Verlängerung der Oberfläche der Druckseite ohne Übergang oder Stufe ermöglicht.

Gemäß einem Aspekt der vorliegenden Erfindung kann ein erstes Klebeband am Übergang zwischen der Saugseite und dem Anbauteil (d.h. ein Hinterkantenkamm) vorgesehen sein.

Ferner kann ein zweites Klebeband auf der Oberfläche der Druckseite benachbart zu dem Übergang vorgesehen sein. Ein dritten Klebeband kann im Bereich der Markierung vorgesehen sein. Eine Ausgleichsmasse kann zwischen dem zweiten und dritten Klebeband aufgetragen werden.

Gemäß einem weiteren Aspekt kann ein Ausgleichsmaterial beispielsweise in Form einer Klebstoffraupe im Bereich des Übergangs vorgesehen sein. Anschließend kann mittels eines Spachtels das Material verteilt werden. Anschließend können alle Klebebänder entfernt werden, so dass ein Rotorblatt erhalten wird, welches einen Übergang zwischen einer Druckseite und einem Anbauteil (d.h. ein Hinterkantenkamm) aufweist, welcher durch ein Ausgleichsmaterial ausgeglichen worden ist, so dass im Bereich des Ausgleichsmaterials eine Verlängerung einer Oberfläche der Druckseite vorgesehen ist.

Der druckseitige (zweite) Übergang kann in Form einer Kante, Stufe, Senke, Aussparung oder Ausnehmung vorhanden sein. Durch Aufbringen der Ausgleichsmasse wird der druckseitige (zweite) Übergang ausgeglichen**.** Ein derartiger Übergang kann sich

in einem Frequenzbereich ab 800 Hz negativ auswirken. Damit kann der genehmigte Schallpegel überschritten werden.

Gemäß der Erfindung ist das Anbauteil ein Hinterkantenkamm.

Gemäß einem Aspekt der vorliegenden Erfindung wird ein Windenergieanlagen-Rotorblatt mit einer Vorderkante, einer Hinterkante, einer Saugseite, einer Druckseite und einem Anbauteil zumindest teilweise an der Druckseite vorgesehen. Ein druckseitiger Übergang zwischen der Druckseite und dem Anbauteil ist vorhanden und wird durch Auftragen einer Ausgleichsmasse ausgeglichen.

Gemäß einem Aspekt der vorliegenden Erfindung ist im Bereich des druckseitigen Übergangs eine Ausnehmung oder ein Vorsprung vorgesehen und die Ausgleichsmasse wird im Bereich des druckseitigen Übergangs und im Bereich der Ausnehmung bzw. der Stufe aufgetragen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem Aspekt der vorliegenden Erfindung,
- Fig. 2: zeigt eine Darstellung eines Querschnitts eines Rotorblattes gemäß einem Aspekt der vorliegenden Erfindung,
- Fig. 3 bis: zeigen jeweils einen schematischen Querschnitt eines Rotorblattes
- Fig. 8: einer Windenergieanlage bei Aufbringen eines Ausgleichsmaterials auf einer Druckseite des Rotorblattes gemäß einem Aspekt der vorliegenden Erfindung, und
- Fig. 9: zeigt einen schematischen Querschnitt eines Rotorblattes gemäß einem Ausführungsbeispiel nicht gemäß der Erfindung.

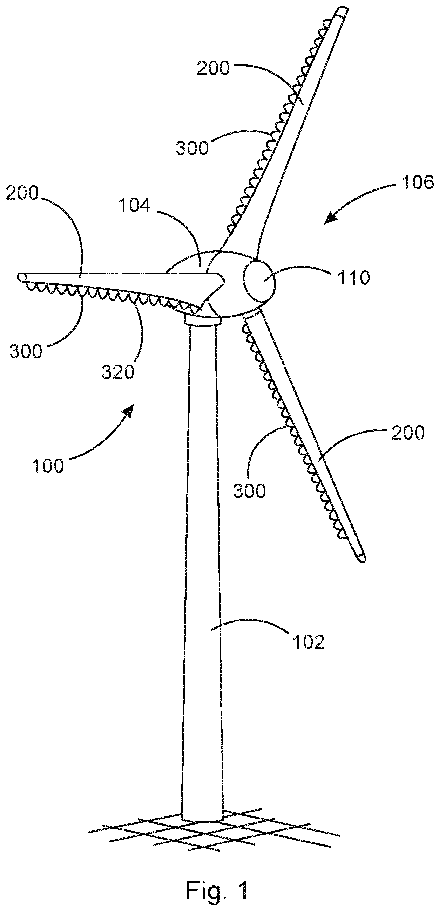

Fig. 1 zeigt eine schematische Darstellung einer Windenergieanlage gemäß einem Aspekt der vorliegenden Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln 210 der jeweiligen Rotorblätter 200 verändert werden.

Das Rotorblatt 200 weist eine Rotorblattwurzel 210, eine Rotorblattspitze 220, eine Rotorblattvorderkante 230, eine Rotorblatthinterkante 240, eine Saugseite 250 und eine Druckseite 260 auf. An der Hinterkante 240 ist zumindest teilweise ein Anbauteil 300 in Form eines Hinterkantenkamms 300 mit einer Mehrzahl von Zacken 320 vorgesehen**.**

Das Anbauteil 300 kann auch nicht an der Hinterkante 240, sondern zumindest teilweise an der Druckseite 260 vorgesehen sein.

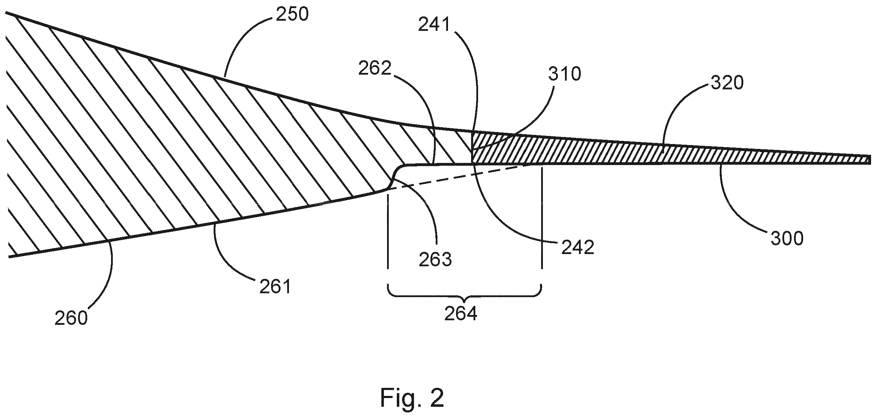

Fig. 2 zeigt eine Darstellung eines Querschnitts eines Rotorblattes gemäß einem Aspekt der vorliegenden Erfindung. Das Rotorblatt von Fig. 2 kann einem Rotorblatt gemäß Fig. 1 entsprechen. Ein Anbauteil 300 in Form eines Hinterkantenkamms 300 ist an der Hinterkante 240 des Rotorblattes 200 befestigt**.** Hierbei kann ein erster (saugseitiger) Übergang 241 zwischen der Saugseite 250 und dem Anbauteil 300 (d.h. ein Hinterkantenkamm) sowie ein zweiter (druckseitiger) Übergang 242 zwischen einer Druckseite 260 und dem Anbauteil 300 (d.h. ein Hinterkantenkamm) vorgesehen sein. Der zweite Übergang 242 kann einen Rücksprung 263 oder einen Vorsprung 263 aufweisen. Dies hat beispielsweise zur Folge, dass die Dicke der Hinterkante 240 in der Richtung der Hinterkante (sprunghaft) abnimmt oder zunimmt.

Bei der Untersuchung eines erfindungsgemäßen Rotorblattes wurde festgestellt, dass sich der druckseitige (zweite) Übergang an der Druckseite auf unerwartete Art und Weise negativ auf die Geräuschemission des Rotorblattes beim Betrieb auswirkt. Bislang war davon ausgegangen worden, dass lediglich ein derartiger Übergang an der Saugseite sich negativ auf die Geräuschemission auswirkt.

Gemäß einem Aspekt der Erfindung weist die Druckseite 200 eine Oberfläche 261 auf, welche im Bereich der Hinterkante 240 im Wesentlichen gerade sein kann. Im Bereich des zweiten Übergangs 242 kann ein Rückschritt oder eine Stufe 262 vorgesehen sein, welcher durch eine Ausgleichsmasse 400 auszugleichen ist.

Erfindungsgemäß wird eine Ausgleichsmasse im Bereich des zweiten Übergangs zwischen Druckseite und Hinterkantenkamm vorgesehen, um den zweiten Übergang auszugleichen. Dies führt zu einer erheblichen Reduzierung der Geräuschemissionen, welche im Betrieb des Rotorblattes hervorgerufen werden.

Der zweite Übergang 242 kann optional einen Rückschritt bzw. eine Ausnehmung 262 mit einer Stufe 263 und einer Länge 264 aufweisen.

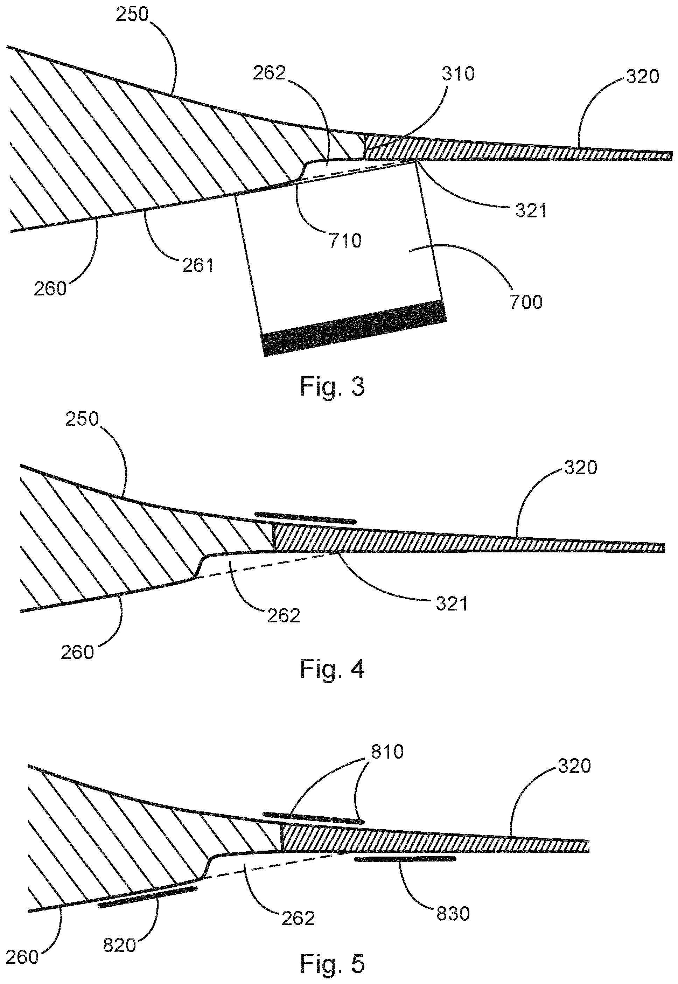

Fig. 3 bis Fig. 8 zeigt einen schematischen Querschnitt eines Rotorblattes einer Windenergieanlage bei Aufbringen eines Ausgleichsmaterials auf einer Druckseite des Rotorblattes gemäß einem Aspekt der vorliegenden Erfindung. Das Rotorblatt 200 weist eine Saugseite 250, eine Druckseite 260, eine Hinterkante 240 sowie ein Anbauteil in Form eines Hinterkantenkamms 300 auf. Die Druckseite 260 weist eine Oberfläche 261 auf, welche im Bereich der Hinterkante 240 im Wesentlichen gerade sein kann. Zwischen der Saugseite 250 und dem Hinterkantenkamm 300 kann ein erster saugseitiger Übergang 241 und zwischen der Druckseite 260 und dem Hinterkantenkamm 300 kann ein zweiter druckseitiger Übergang 242 vorgesehen sein. Im Bereich des zweiten Übergangs 242 kann ein Rückschritt 262 in dem Material des Rotorblattes im Bereich der Hinterkante 240 vorgesehen sein, welcher durch eine Ausgleichsmasse auszugleichen ist. Der zweite Übergang 242 kann einen Rückschritt bzw. eine Ausnehmung 262 mit einer Stufe 263 und einer Länge 264 in dem Material des Rotorblattes aufweisen. Zum Ausgleichen des Rückschritts bzw. im Übergang 262 kann ein Spachtel 700 mit einem ersten geraden Ende 710 vorgesehen sein. Der Spachtel 700 kann dabei derart im Bereich des zweiten Übergangs 242 angelegt werden, dass das Ende 210 sowohl an einer Oberfläche 261 der Druckseite anliegt als auch an einer Druckseite des Hinterkantenkamms anliegt. Wie in Fig. 3 zu sehen, ist damit - im Querschnitt - die auszugleichende Fläche durch den Rückschritt 262 und das Ende 710 des Spachtels 700 begrenzt. Optional kann der Berührungspunkt zwischen dem Ende 710 und der Druckseite des Hinterkantenkamms mit einer Markierung 321 versehen werden. Damit kann festgelegt werden, bis zu welchem Punkt die Ausgleichsmasse 400 aufgetragen werden soll. Damit soll der Übergang zwischen der Druckseite 260 und dem Hinterkantenkamm 300 ausgeglichen werden.

Dazu kann beispielsweise wie in Fig. 4 zu sehen ein erstes Klebeband 810 im Bereich des ersten Übergangs 241 zwischen der Saugseite 250 und dem Hinterkantenkamm 300 vorgesehen sein.

Wie in Fig. 5 zu sehen, kann ein zweites Klebeband 820 an der Druckseite 260 benachbart zum zweiten Übergang 242 vorgesehen sein. Ein drittes Klebeband 830 kann im Bereich der Markierung 321 vorgesehen sein.

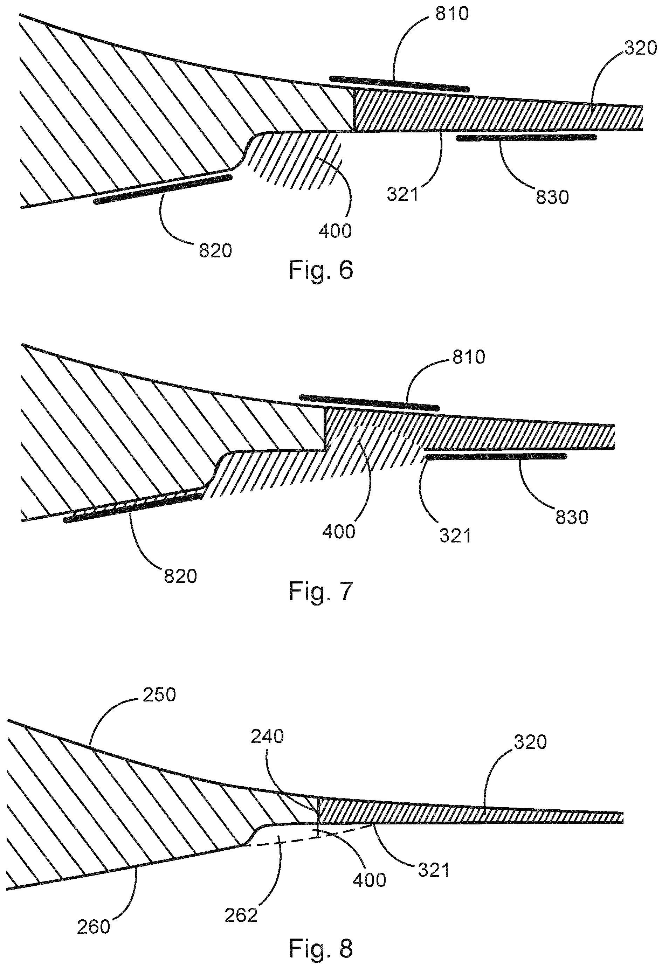

Anschließend kann wie in Fig. 6 gezeigt ein Ausgleichsmaterial 400 beispielsweise in Form einer Klebstoffraupe aufgetragen werden. Das Material 400 kann dann beispielsweise mittels eines Spachtels 700 zwischen den Klebebändern 820, 830 aufgetragen und verteilt werden.

In Fig. 8 ist dann das Endergebnis zu sehen. Hierbei ist dann die Oberfläche des Ausgleichsmaterials an die Oberfläche 261 der Druckseite 260 des Rotorblattes im Bereich der Hinterkante angepasst.

Der zweite Übergang 242 ist durch die Ausgleichsmasse ausgeglichen worden.

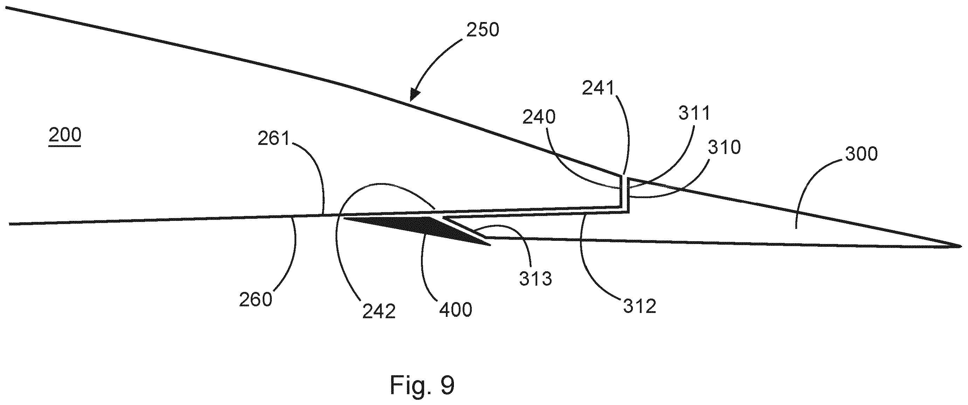

Fig. 9 zeigt einen schematischen Querschnitt eines Rotorblattes gemäß einem Ausführungsbeispiel nicht gemäß der Erfindung. Das Rotorblatt gemäß Fig. 9 kann dabei dem Rotorblatt gemäß Fig. 2 entsprechen. Das Rotorblatt 200 weist eine Saugseite 250 und eine Druckseite 260 mit einer Oberfläche 261 auf. Das Rotorblatt 200 weist ferner eine Hinterkante 240 auf. Im Bereich der Hinterkante 240 kann ein Anbauteil 300 beispielsweise in Form eines Hinterkantenkamms 300 vorgesehen sein. Während gemäß dem Ausführungsbeispiel von Fig. 2 im Bereich der Druckseite 260 des Rotorblattes eine Ausnehmung vorhanden ist, ist eine derartige Ausnehmung nicht in dem Rotorblatt gemäß Fig. 9 vorhanden. Ein erster saugseitiger Übergang 241 ist im Bereich der Saugseite 250 und dem Anbauteil 300 vorgesehen. Ein zweiter druckseitiger Übergang ist zwischen der Druckseite 260 und dem Anbauteil 300 vorgesehen. Gemäß dem Ausführungsbeispiel von Fig. 9 weist das Anbauteil 300 ein erstes Ende 310 mit einem ersten, zweiten und dritten Abschnitt 311, 312, 313 auf. Hierbei erstreckt sich der zweite und dritte Abschnitt 312, 313 zumindest teilweise entlang der Oberfläche 261 der Druckseite 260. Somit ist im Bereich des zweiten druckseitigen Übergangs 242 zwischen der Druckseite 260 und dem Anbauteil 300 eine Stufe oder ein Vorsprung 313 vorhanden. Dieser Vorsprung 313 wirkt sich negativ auf die aerodynamischen Eigenschaften des Rotorblattes 200 und insbesondere auf die akustischen Eigenschaften des Rotorblattes aus. Somit wird analog zu dem Ausführungsbeispiel von Fig. 3 bis Fig. 8 eine Ausgleichsmasse 400 im Bereich des zweiten druckseitigen Übergangs 242 vorgesehen, um einen aerodynamisch günstigeren Übergang zu erhalten.

Gemäß der Erfindung ist das Anbauteil 300 ein Hinterkantenkamm. Maßgeblich ist hierbei, dass eine Ausnehmung (wie in Fig. 3) oder ein Vorsprung (wie in Fig. 9) an der Druckseite vorhanden ist, so dass ein aerodynamisch ungünstiger Übergang vorhanden ist.

Gemäß einem Aspekt der vorliegenden Erfindung wird mittels einer Ausgleichsmasse 400 der aerodynamisch ungünstige Übergang bearbeitet, um einen aerodynamisch günstigeren Übergang zu erhalten.

### Bezugszeichenliste

- 100: Windenergieanlage
- 102: Turm
- 104: Gondel
- 106: aerodynamischer Rotor
- 110: Spinner
- 200: Rotorblätter
- 200b: Rotorblattwurzeln
- 210: Rotorblattwurzel
- 220: Rotorblattspitze
- 230: Rotorblattvorderkante
- 240: Rotorblatthinterkante
- 241: erster Übergang
- 242: zweiter Übergang
- 250: Saugseite
- 260: Druckseite
- 261: Oberfläche
- 262: Rückschritt
- 263: Stufe
- 264: Ausgleichslänge
- 300: Anbauteil
- 310: erstes Ende
- 311: erster Abschnitt
- 312: zweiter Abschnitt
- 313: dritter Abschnitt
- 320: Zacken
- 321: Markierung
- 400: Klebstoff / Ausgleichsmasse
- 700: Spachtel
- 710: erstes Ende
- 810: erstes Klebeband
- 820: zweites Klebeband
- 830: drittes Klebeband

## Patentansprüche

1. Verfahren zur Reduzierung einer Geräuschemission eines Windenergieanlagen-Rotorblattes (200), wobei das Windenergieanlagen-Rotorblatt eine Vorderkante (230), eine Hinterkante (240), eine Saugseite (250), eine Druckseite (260) und einen Anbauteil (300) als Hinterkantenkamm an der Hinterkante (240) aufweist,
wobei ein druckseitiger Übergang (242) zwischen der Druckseite (260) und dem Anbauteil (300) vorhanden ist, mit dem Schritt:
Ausgleichen des druckseitigen Übergangs (242) durch Auftragen einer Ausgleichsmasse (400),
wobei im Bereich des druckseitigen Übergangs (242) eine Ausnehmung in Form einer Stufe, einer Senke oder einer Aussparung (262) in einem Material des Rotorblattes (200) an der Druckseite (260) der Hinterkante (240) vorhanden ist,
wobei die Ausnehmung (262) durch die Ausgleichsmasse (400) ausgeglichen wird.

2. Verfahren nach Anspruch 1, wobei
das Anbauteil (300) als ein Hinterkantenkamm (300) ausgestaltet ist,
wobei ein saugseitiger Übergang (241) zwischen der Saugseite (250) und dem Hinterkantenkamm (300) vorhanden ist,

3. Verfahren nach Anspruch 2, wobei
zum Ausgleichen des druckseitigen Übergangs (242) ein Spachtel (700) an eine Oberfläche (261) der Druckseite (260) angelegt wird und den druckseitigen Übergang (242) derart überdeckt, dass ein Bereich (321) an einer Druckseite (260) des Hinterkantenkamms (300), an welchem das freie Ende des Spachtels (700) anliegt, einen Ausgleichsmasse-Bereich darstellt, bis zu welchem die Ausgleichsmasse (400) aufzutragen ist.

4. Verfahren nach Anspruch 1, wobei
ein erstes Klebeband (810) am saugseitigen Übergang zwischen der Saugseite und dem Hinterkantenkamm (300) vorgesehen wird,
wobei ein zweites Klebeband (820) auf der Oberfläche (261) der Druckseite (260) benachbart zu dem zweiten Übergang (242) vorgesehen wird und wobei ein drittes Klebeband (30) im Ausgleichsmasse-Bereich vorgesehen wird.

5. Verfahren nach einem der Ansprüche 1 bis 3, wobei
ein Ausgleichsmaterial (400) im Bereich des druckseitigen Übergangs (242) aufgetragen wird und mittels eines Spachtels (700) verteilt wird.

6. Verfahren nach Anspruch 1 oder 2, wobei
das Anbauteil (300) zumindest teilweise an der Druckseite (260) angeordnet ist,
wobei das Anbauteil (300) ein erstes Ende (310) aufweist,
wobei im Bereich des druckseitigen Übergangs (242) ein Vorsprung oder eine Stufe (313) zwischen der Druckseite (260) und dem ersten Ende (310) des Anbauteils (300) vorhanden ist,
wobei die Ausgleichsmasse (400) im Bereich des druckseitigen Übergangs (242) aufgetragen ist.

7. Windenergieanlagen-Rotorblatt (200), mit
einer Vorderkante (230),
einer Hinterkante (240),
einer Saugseite (250),
einer Druckseite (260), und
einem Anbauteil (300) als Hinterkantenkamm an der Hinterkante (240),
wobei ein druckseitiger Übergang (242) zwischen der Druckseite (260) und dem Anbauteil (300) vorhanden ist,
wobei eine Ausgleichsmasse (400) im Bereich des druckseitigen Übergangs (242) vorgesehen ist,
wobei im Bereich des druckseitigen Übergangs (242) eine Ausnehmung in einem Material des Rotorblattes (200) an der Druckseite (260) der Hinterkante (240) vorhanden ist, welche durch die Ausgleichsmasse (400) ausgeglichen ist,
wobei die Ausnehmung (262) durch die Ausgleichsmasse (400) ausgeglichen wird.

8. Windenergieanlagen-Rotorblatt (200) nach Anspruch 7, wobei
im Bereich des druckseitigen Übergangs (242) ein Vorsprung oder eine Stufe zwischen der Druckseite (260) und einem ersten Ende (310) des Anbauteils (300) vorhanden ist, wobei die Ausgleichsmasse im Bereich des druckseitigen Übergangs aufgetragen ist.

## Claims

1. A method for reducing a noise emission of a wind turbine rotor blade (200), wherein the wind turbine rotor blade has a leading edge (230), a trailing edge (240), a suction side (250), a pressure side (260) and an attachment part (300) as a trailing edge comb on the trailing edge (240),
wherein a pressure-side transition (242) is present between the pressure side (260) and the attachment part (300), with the following step:
leveling the pressure-side transition (242) by applying a leveling compound (400),
wherein a recess in the form of a step (262), a sink or a cut out is present in the area of the pressure-side transition (242) in a material of the rotor blade (200) on the pressure side (260) of the trailing edge (240),
wherein the recess (262) is levelled with levelling material (400).

2. The method according to claim 1, wherein
the attachment part (300) is configured as a trailing edge comb (300),
wherein a suction-side transition (241) is present between the suction side (250) and the trailing edge comb (300).

3. The method according to claim 2, wherein,
in order to level the pressure-side transition (242), a spatula (700) is applied against a surface (261) of the pressure side (260), and covers the pressure-side transition (242) in such a way that an area (321) on one pressure side (260) of the trailing edge comb (300) against which the free end of the spatula (700) abuts represents an area up to which the leveling compound (400) is to be applied.

4. The method according to claim 1, wherein
a first adhesive tape (810) is provided on the pressure-side transition between the suction side and the trailing edge comb (300),
wherein a second adhesive tape (820) is provided on the surface (261) of the pressure side (260) adjacent to the second transition (242), and wherein a third adhesive tape (30) is provided in the leveling compound area.

5. The method according to claim 1 to 3, wherein
a leveling material (400) is applied in the area of the pressure-side transition (242), and distributed by means of a spatula (700).

6. The method according to claim 1 or 2, wherein
the attachment part (300) is at least partially arranged on the pressure side (260),
wherein the attachment part (300) has a first end (310),
wherein a protrusion or a step (313) is present in the area of the pressure-side transition (242) between the pressure side (260) and the first end (310) of the attachment part (300),
wherein the leveling compound (400) is applied in the area of the pressure-side transition (242).

7. A wind turbine rotor blade (200), with
a leading edge (230),
a trailing edge (240),
a suction side (250),
a pressure side (260), and
an attachment part (300) as trailing edge comb on the trailing edge (240),
wherein a pressure-side transition (242) is present between the pressure side (260) and the attachment part (300),
wherein a leveling compound (400) is present in the area of the pressure-side transition (242),
wherein, in the area of the pressure-side transition (242), a recess in a material of the rotor blade (200) is present on the pressure side (260) of the trailing edge (240), and leveled by the leveling compound (400),
wherein the recess (262) is levelled with levelling material (400).

8. The wind turbine rotor blade (200) according to claim 7, wherein
in the area of the pressure-side transition (242), a protrusion or a step is present between the pressure side (260) and a first end (310) of the attachment part (300), wherein the leveling compound is applied in the area of the pressure-side transition.

## Revendications

1. Procédé de réduction d'une émission sonore d'une pale de rotor d'éolienne (200), dans lequel la pale de rotor d'éolienne présente un bord d'attaque (230), un bord de fuite (240), un côté d'aspiration (250), un côté de pression (260) et une pièce rapportée (300) comme peigne de bord de fuite sur le bord de fuite (240),
dans lequel une transition côté pression (242) est présente entre le côté de pression (260) et la pièce rapportée (300), avec l'étape :
d'équilibrage de la transition côté pression (242) en appliquant une masse d'équilibrage (400),
dans lequel un évidement sous forme de marche, de dépression ou de creux (262) dans un matériau de la pale de rotor (200) est présent sur le côté de pression (260) du bord de fuite (240) dans la zone de transition côté pression (242),
dans lequel l'évidement (262) est équilibré par la masse d'équilibrage (400).

2. Procédé selon la revendication 1, dans lequel
la pièce rapportée (300) est configurée comme un peigne de bord de fuite (300),
dans lequel une transition côté aspiration (241) est présente entre le côté d'aspiration (250) et le peigne de bord de fuite (300).

3. Procédé selon la revendication 2, dans lequel
pour équilibrer la transition côté pression (242), une spatule (700) est placée sur une surface (261) du côté de pression (260) et recouvre la transition côté pression (242) de telle manière qu'une zone (321) sur un côté de pression (260) du peigne de bord de fuite (300), sur laquelle repose l'extrémité libre de la spatule (700), constitue une zone de masse d'équilibrage jusqu'à laquelle la masse d'équilibrage (400) doit être appliquée.

4. Procédé selon la revendication 1, dans lequel
un premier ruban adhésif (810) est prévu sur la transition côté aspiration entre le côté d'aspiration et le peigne de bord de fuite (300),
dans lequel une deuxième bande adhésive (820) est prévue sur la surface (261) du côté de pression (260) de manière adjacente à la deuxième transition (242) et dans lequel une troisième bande adhésive (30) est prévue dans la zone de masse d'équilibrage.

5. Procédé selon l'une quelconque des revendications 1 à 3, dans lequel
un matériau d'équilibrage (400) est appliqué dans la zone de transition côté pression (242) et est réparti au moyen d'une spatule (700).

6. Procédé selon la revendication 1 ou 2, dans lequel
la pièce rapportée (300) est disposée au moins en partie sur le côté de pression (260),
dans lequel la pièce rapportée (300) présente une première extrémité (310),
dans lequel une partie faisant saillie ou un étage (313) est présent dans la zone de transition côté pression (242) entre le côté de pression (260) et la première extrémité (310) de la pièce rapportée (300),
dans lequel la masse d'équilibrage (400) est appliquée dans la zone de transition côté pression (242).

7. Pale de rotor d'éolienne (200), avec
un bord d'attaque (230),
un bord de fuite (240),
un côté d'aspiration (250),
un côté de pression (260),
une pièce rapportée (300) en tant que peigne de bord de fuite sur le bord de fuite (240),
dans laquelle une transition côté pression (242) est présente entre le côté de pression (260) et la pièce rapportée (300),
dans laquelle une masse d'équilibrage (400) est prévue dans la zone de la transition côté pression (242),
dans laquelle, dans la zone de transition côté pression (242), il existe un évidement dans un matériau de la pale de rotor (200) sur le côté de pression (260) du bord de fuite (240) qui est équilibré par la masse d'équilibrage (400),
dans laquelle l'évidement (262) est équilibré par la masse d'équilibrage (400).

8. Pale de rotor d'éolienne (200) selon la revendication 7, dans laquelle
une partie faisant saillie ou une marche est présente dans la zone de transition côté pression (242) entre le côté de pression (260) et une première extrémité (310) de la pièce rapportée (300), dans laquelle la masse d'équilibrage est appliquée dans la zone de transition côté pression.
